# EUROPÄISCHE PATENTANMELDUNG

(11) **EP 2 886 421 A1**
(43) Veröffentlichungstag der Anmeldung: **24.06.2015**
(21) Anmeldenummer: 14194921.4
(22) Anmeldetag: 26.11.2014
(51) Int. Cl.: B62D 15/02, F16H 55/16, G01B 21/22

(54) **Sensorvorrichtung zum Erfassen eines Positionswinkels eines drehbaren Bauteils eines Kraftfahrzeugs und Kraftfahrzeug mit vorgenannter Sensorvorrichtung**

(30) Priorität: 21.12.2013 DE 102013021824
(71) Anmelder: Valeo Schalter und Sensoren GmbH, 74321 Bietigheim-Bissingen (DE)
(72) Erfinder: Simonis, Karl, 74321 Bietigheim-Bissingen (DE); Jaeckle, Daniela, 74321 Bietigheim-Bissingen (DE); Gruener, Roland, 74321 Bietigheim-Bissingen (DE); Schoch, Lars, 74321 Bietigheim-Bissingen (DE); Schoepe, Roman, 74321 Bietigheim-Bissingen (DE)

(57) **Zusammenfassung**

Die Erfindung betrifft eine Sensorvorrichtung (1) zum Erfassen eines Positionswinkels eines drehbaren Bauteils eines Kraftfahrzeugs, insbesondere zum Erfassen eines Lenkwinkels einer Lenkwelle des Kraftfahrzeugs, mit einer Zahnradanordnung (2) aus zumindest einem ersten Zahnrad (3) und einem zweiten Zahnrad (4), wobei das erste Zahnrad (3) mit dem Bauteil drehfest koppelbar ist und eine umlaufende Zahnstruktur (6) aufweist, welche zur Übertragung einer Drehbewegung in eine umlaufende Zahnstruktur (10) des zweiten Zahnrades (4) eingreift, wobei Zähne (7, 13) zumindest einer der Zahnstrukturen (6, 10) jeweils einen im Wesentlichen starren Abschnitt (14) zur Übertragung der Drehbewegung und einen an den starren Abschnitt (14) in axialer Richtung anschließenden elastischen Abschnitt (15) aufweisen, mittels welchem die Zahnstrukturen (6, 10) unter Spielausgleich in Umfangsrichtung (8, 12) miteinander verspannt sind.

## Beschreibung

Die Erfindung betrifft eine Sensorvorrichtung zum Erfassen eines Positionswinkels eines drehbaren Bauteils eines Kraftfahrzeugs, insbesondere zum Erfassen eines Lenkwinkels einer Lenkwelle des Kraftfahrzeugs, mit einer Zahnradanordnung aus zumindest einem ersten Zahnrad und einem zweiten Zahnrad, wobei das erste Zahnrad mit dem Bauteil des Kraftfahrzeugs drehfest koppelbar ist und eine umlaufende Zahnstruktur aufweist, welche zur Übertragung einer Drehbewegung auf das zweie Zahnrad in eine umlaufende Zahnstruktur des zweiten Zahnrads eingreift. Die Erfindung betrifft außerdem ein Kraftfahrzeug, insbesondere einen Personenkraftwagen, mit einem drehbaren Bauteil und einer erfindungsgemäßen Sensorvorrichtung zum Erfassen eines Positionswinkels des Bauteils.

Lenkwinkelsensorvorrichtungen, welche zur Erfassung des aktuellen Lenkwinkels der Lenkwelle eines Kraftfahrzeugs dienen, sind bereits aus dem Stand der Technik bekannt. Eine solche Sensorvorrichtung ist zum Beispiel aus dem Dokument DE 10 2008 011 448 A1 als bekannt zu entnehmen. Eine Drehbewegung der Lenkwelle wird hier über ein mit der Lenkwelle drehfest verbundenes Zahnrad auf ein kleineres Zahnrad übertragen, welches einen Magneten trägt. Die Rotation des kleineren Zahnrads wird dann mithilfe eines Magnetfeldsensors erfasst.

Bei derartigen Sensorvorrichtungen zur Lenkwinkelbestimmung sind die einzelnen Zahnräder mit ihren Lagen der Drehachsen ortsfest zueinander angeordnet. Deshalb und in Verbindung mit der Ausgestaltung der Zahnräder treten aufgrund der erforderlichen Drehachsenabstandstoleranzen spielbehaftete Bewegungsmuster auf. Es ist daher auch ein Spiel zwischen antreibendem und angetriebenem Zahnrad vorhanden, welches sich insbesondere bei Drehrichtungswechsel negativ auf den zu bestimmenden Winkel auswirkt (Hysterese), da die Drehbewegung permanent an das anzutreibende Zahnrad weitergegeben wird. Dies bedeutet, dass die einzelnen Zähne der ineinander greifenden Zahnräder in Umlaufrichtung betrachtet nicht so ineinander eingreifen können, dass sie jeweils mit gegenüberliegenden Zahnflanken direkt aneinander anliegen.

Des Weiteren tritt durch die erforderliche Achsabstandstoleranz ein Verklemmen der Zahnräder zueinander auf, welches zu Ablaufgeräuschen führen kann.

Eine Abhilfe schafft hier eine Sensorvorrichtung, wie sie aus dem Dokument DE 10 2010 034 261 A1 bekannt ist. Hier wird bei den Zahnrädern eine elastische Zahnstruktur eingesetzt, deren Zähne in Umfangsrichtung in sich verformbar ausgebildet sind. Um diese Verformbarkeit zu ermöglichen, sind die Zähne in radialer Richtung geschlitzt ausgebildet, sodass jeder Zahn zwei Zahnteile aufweist, die in Umfangsrichtung beabstandet zueinander angeordnet sind. Durch eine solche Ausgestaltung der Zähne kann eine spielfreie Drehmomentübertragung zwischen den Zahnrädern ermöglicht werden.

Ein Zahnrad für eine Sensorvorrichtung zum Erfassen eines Positionswinkels eines drehbaren Bauteils eines Fahrzeugs ist des Weiteren aus dem Dokument DE 10 2011 122 341 A1 bekannt.

Werden die Zähne eines Zahnrads elastisch verformbar ausgebildet, so kann zwar eine spielfreie Wirkverbindung zwischen den Zahnrädern ermöglicht werden, jedoch bleibt hier das ursprüngliche Zahnprofil im Betrieb der Sensorvorrichtung nicht erhalten. Dies wiederum beeinflusst die Drehwegübertragung auf das kleinere Zahnrad und somit die Genauigkeit der Winkelerfassung.

Es ist Aufgabe der Erfindung, eine Sensorvorrichtung zum Erfassen eines Positionswinkels eines drehbaren Bauteils eines Kraftfahrzeugs sowie ein Kraftfahrzeug mit einer solchen Sensorvorrichtung zu schaffen, mit weicher bzw. bei welchem das Erfassen des Positionswinkels im Vergleich zum Stand der Technik präziser erfolgen kann.

Diese Aufgabe wird erfindungsgemäß durch eine Sensorvorrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Sensorvorrichtung ist zum Erfassen eines Positionswinkels eines drehbaren Bauteils eines Kraftfahrzeugs ausgebildet, insbesondere zum Erfassen eines Lenkwinkels einer Lenkwelle des Kraftfahrzeugs. Die Sensorvorrichtung umfasst eine Zahnradanordnung, welche zumindest ein erstes Zahnrad und ein zweites Zahnrad umfasst, wobei das erste Zahnrad mit dem Bauteil des Kraftfahrzeugs drehfest verbunden ist und eine umlaufende Zahnstruktur aufweist, die zur Drehbewegungsübertragung zwischen den Zahnrädern in eine Zahnstruktur des zweiten Zahnrads eingreift und somit mit der Zahnstruktur des zweiten Zahnrads in Wirkverbindung steht. Das erste Zahnrad treibt somit das zweite Zahnrad an. Das zweite Zahnrad weist bevorzugt einen kleineren Durchmesser als das erste Zahnrad auf. Erfindungsgemäß ist vorgesehen, dass Zähne zumindest einer der Zahnstrukturen jeweils einen im Wesentlichen starren Abschnitt zum Übertragen der Drehbewegung und einen an den starren Abschnitt in axialer Richtung anschließenden elastischen Abschnitt aufweisen, mittels welchem die Zahnstrukturen unter Spielausgleich in Umfangsrichtung miteinander verspannt sind.

Durch eine derartige Ausgestaltung der Zähne mit einem starren Abschnitt und einem daran axial anschließenden elastischen Abschnitt kann einerseits das bei bekannten Ausgestaltungen unvermeidbare Spiel beim Eingriff der Zähne vermieden werden und andererseits auch eine winkeltreue Drehwegübertragung auf das zweite Zahnrad ermöglicht werden. Während durch die starren Abschnitte das ursprüngliche Zahnprofil der Zahnstruktur erhalten bleibt und eine winkeltreue Übertragung der Drehbewegung möglich ist, sorgen die elastischen Abschnitte für einen Spielausgleich und somit für eine spielfreie Anordnung der beiderseitigen Zahnstrukturen in Umfangsrichtung. Die Genauigkeit der Erfassung des Positionswinkels wird somit weder durch das Spiel noch durch eine Beeinflussung des Zahnprofils beeinträchtigt, da die Zähne des einen Rades durch die elastischen Abschnitte der Zähne des anderen Rades in Umlaufrichtung gedrückt und somit in den Zahnlücken verspannt werden. Die erfindungsgemäße Sensorvorrichtung hat folglich insgesamt den Vorteil, dass der Positionswinkel des drehbaren Bauteils besonders präzise erfasst werden kann.

Die Erfassung des Positionswinkels kann beispielsweise so aussehen, dass an dem zweiten, kleineren Zahnrad ein Permanentmagnet eingesetzt wird. Die Bewegung des zweiten Zahnrads kann dann mittels eines zugeordneten Magnetfeldsensors erfasst werden.

Insbesondere ist vorgesehen, dass sich die elastischen Abschnitte an den jeweils zugeordneten starren Abschnitt unmittelbar und somit direkt axial anschließen.

In einer Ausführungsform ist vorgesehen, dass die elastischen Abschnitte frei von den jeweiligen starren Abschnitten in axialer Richtung abstehen und zum Spielausgleich zwischen den Zahnstrukturen biegeelastisch verformbar ausgebildet sind. Somit wirken die elastischen Abschnitte quasi als Federelemente, welche die Zähne des anderen Zahnrads in Umfangsrichtung mit einer definierten Federkraft drücken und somit in den korrespondierenden Zahnlücken verspannen. Das Zahnspiel wird somit definiert ausgeglichen.

Hinsichtlich der Ausgestaltung der elastischen Abschnitte können unterschiedliche Ausführungsformen vorgesehen sein:
Zum einen können die elastischen Abschnitte einstückig mit dem jeweils zugeordneten starren Abschnitt ausgebildet sein. Dies bedeutet, dass die elastischen Abschnitte integral mit dem jeweiligen starren Abschnitt ausgebildet sind. Das gesamte Zahnrad einschließlich der elastischen Abschnitte kann hier beispielsweise aus Kunststoff und als Gussteil ausgebildet sein. Dies hat den Vorteil, dass der Herstellungsaufwand des gesamten Zahnrads durch die zusätzlichen elastischen Abschnitte nicht erhöht wird und die elastischen Abschnitte quasi automatisch in einem Spritzgussprozess zusammen mit den starren Abschnitten hergestellt werden können.

Alternativ kann jedoch vorgesehen sein, dass die elastischen Abschnitte jeweils durch ein von dem zugeordneten starren Abschnitt separates Bauteil gebildet sind, welches an dem zugeordneten starren Abschnitt angebracht ist. Dieses separate Bauteil kann beispielsweise ein Stanzbiegeteil sein. Dies hat Vorteile hinsichtlich der elastischen Wirkung und der Federkraft der elastischen Abschnitte.

Die Erfindung betrifft außerdem ein Kraftfahrzeug, insbesondere einen Personenkraftwagen, mit einem drehbaren Bauteil, insbesondere einer Lenkwelle, und mit einer erfindungsgemäßen Sensorvorrichtung zum Erfassen eines Positionswinkels des Bauteils.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele sowie unter Bezugnahme auf die beigefügten Zeichnungen näher erläutert.

Es zeigen:
- Fig. 1: in schematischer und perspektivischer Darstellung Teilkomponenten einer Sensorvorrichtung gemäß einer Ausführungsform der Erfindung;
- Fig. 2: in vergrößerter Darstellung einen Bereich aus Fig. 1; und
- Fig. 3: in schematischer und perspektivischer Darstellung einen Bereich eines Zahnrads einer Sensorvorrichtung nach einer weiteren Ausführungsform der Erfindung.

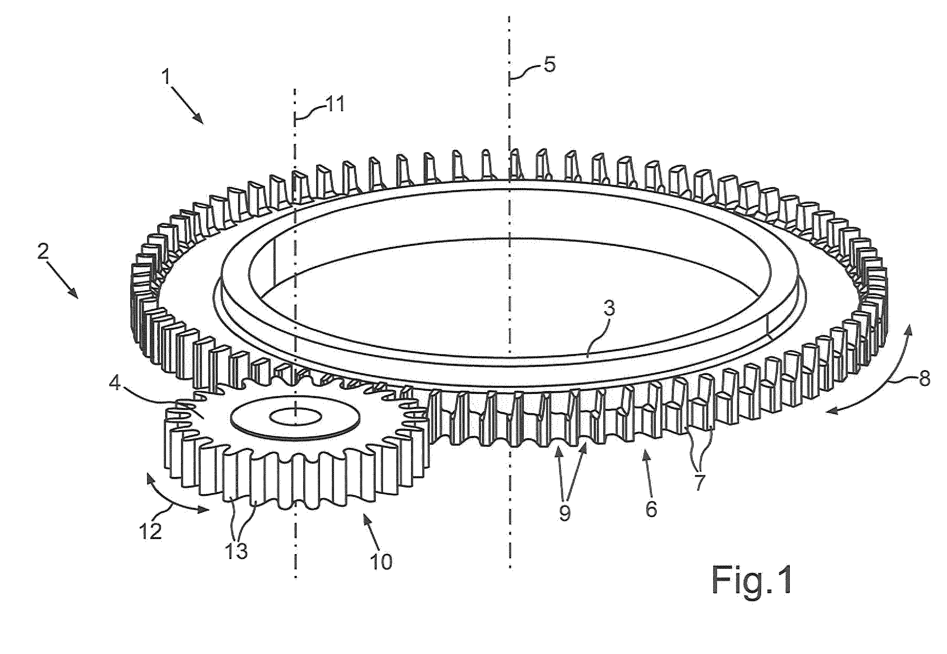

In Fig. 1 ist eine Sensorvorrichtung 1 gezeigt, welche zur Erfassung eines Lenkwinkels einer nicht näher dargestellten Lenkwelle eines Kraftfahrzeugs ausgebildet ist. Die Sensorvorrichtung 1 ist daher in dem Kraftfahrzeug angeordnet. Die Sensorvorrichtung 1 umfasst eine Zahnradanordnung 2, welche ein erstes Zahnrad 3 sowie ein zweites Zahnrad 4 aufweist. Das erste Zahnrad 3 ist mit der genannten Lenkwelle drehfest verbunden, beispielsweise über eine entsprechende Befestigungshülse. Eine Drehachse 5 des ersten Zahnrads 3 fällt insbesondere mit der Drehachse der Lenkwelle des Kraftfahrzeugs zusammen.

Das erste Zahnrad 3 hat eine umlaufende Zahnstruktur 6 mit einer Vielzahl von Zähnen 7, welche in Umfangsrichtung 8 des ersten Zahnrads 3 beabstandet zueinander angeordnet sind, sodass zwischen jeweils zwei benachbarten Zähnen 7 eine Zahnlücke 9 ausgebildet ist. Die Zähne 7 sind in gleichen Abständen in Umfangsrichtung 8 verteilt angeordnet.

In die Zahnstruktur 6 des ersten Zahnrads 3 greift eine Zahnstruktur 10 des zweiten Zahnrads 4 ein. Somit steht die erste Zahnstruktur 6 mit der zweiten Zahnstruktur 10 in Wirkverbindung, sodass eine Drehbewegung des ersten Zahnrads 3 auf das zweite, kleinere Zahnrad 4 übertragen werden kann. Eine Drehachse 11 des zweiten Zahnrads 4 verläuft parallel zur Drehachse 5 des ersten Zahnrads 3 und ist versetzt dazu angeordnet.

Die beiden Zahnstrukturen 6, 10 sind an jeweiligen Außenumfängen der Zahnräder 3 bzw. 4 ausgebildet. Somit ist das zweite Zahnrad 4 außerhalb des ersten Zahnrads 3 angeordnet.

Um den aktuellen Lenkwinkel der Lenkwelle erfassen zu können, kann in das zweite Zahnrad 4 beispielsweise ein Permanentmagnet integriert sein. Die Bewegung des zweiten Zahnrads 4 kann dann mithilfe eines Magnetfeldsensors erfasst werden, dessen Signal dann mittels einer entsprechenden elektronischen Auswerteeinrichtung im Hinblick auf den aktuellen Lenkwinkel ausgewertet werden kann.

Auch die Zahnstruktur 10 des zweiten Zahnrads 4 umfasst eine Vielzahl von in Umfangsrichtung 12 des zweiten Zahnrads 4 verteilt angeordneten Zähnen 13. Diese Zähne 13 greifen in die Zahnlücken 9 der Zahnstruktur 6 des ersten Zahnrads 3 ein.

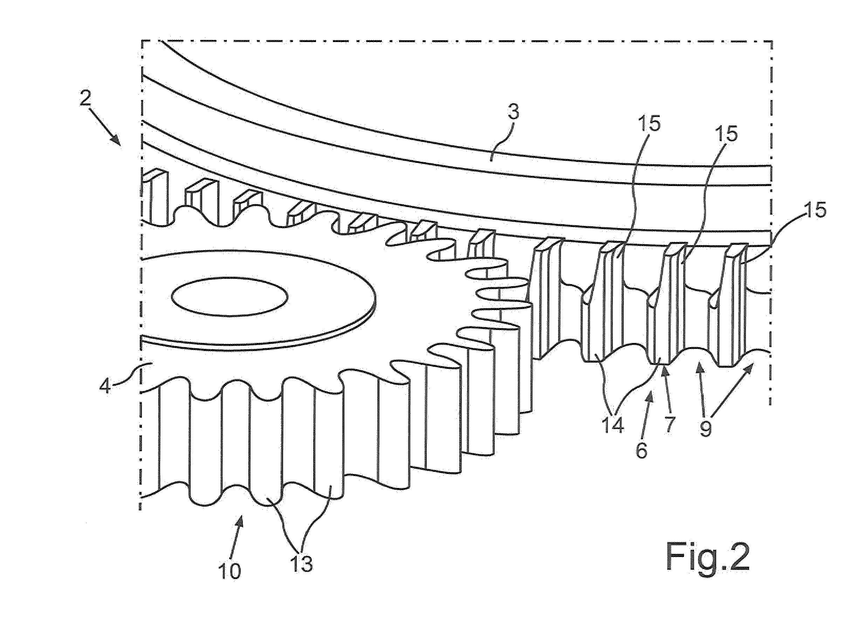

Wie aus Fig. 2 hervorgeht, entspricht die axiale Höhe der Zähne 13 des zweiten Zahnrads 4 im Wesentlichen der axialen Höhe der Zähne 7 des ersten Zahnrads 3. In Fig. 2 ist dabei die Ausgestaltung der Zähne 7 des ersten Zahnrads 3 genauer dargestellt. Jeder Zahn 7 weist hier einen massiven und starren Abschnitt 14 auf, wie auch einen daran unmittelbar axial anschließenden elastischen Abschnitt 15, der in axialer Richtung etwa so hoch oder ein wenig kürzer als der zugeordnete starre Abschnitt 14 ist. Die starren Abschnitte 14 dienen zur winkeltreuen Drehwegübertragung vom ersten Zahnrad 3 auf das zweite Zahnrad 4. Demgegenüber haben die elastischen Abschnitte 15 die Funktion des Spielausgleichs zwischen den Zahnrädern 3, 4. Durch die elastischen Abschnitte 15 wird im Betrieb der Sensorvorrichtung 1 nämlich eine Federkraft in Umfangsrichtung 8 bzw. tangential auf die Zähne 13 des zweiten Zahnrads 4 erzeugt, sodass die Zähne 13 des zweiten Zahnrads 4 quasi in Umfangsrichtung 8 gegen die Zähne 7 des ersten Zahnrads 3 gedrückt werden. Durch diese Verspannung entsteht in Umfangsrichtung 8 eine spielfreie Wirkverbindung zwischen den beiderseitigen Zahnstrukturen 6, 10. Die Zähne 13 des zweiten Zahnrads 4 werden durch die elastischen Abschnitte 15 spielfrei in den Zahnlücken 9 des ersten Zahnrads 3 verspannt. Das Zahnspiel wird immer definiert, einseitig ausgeglichen.

Der Vorteil einer solchen Ausgestaltung der Zähne 7 ist die winkeltreue Drehwegübertragung auf das kleinere, zweite Zahnrad 4, da die Zähne 7 nicht vollständig verformt werden und durch die starren Abschnitte 14 das ursprüngliche Zahnprofil erhalten bleibt, was die Genauigkeit der Erfassung des Lenkwinkels im Vergleich zum Stand der Technik verbessert.

Im Ausführungsbeispiel gemäß den Fig. 1 und 2 sind die starren Abschnitte 14 jeweils einstückig mit dem zugeordneten elastischen Abschnitt 15 ausgebildet, beispielsweise aus Kunststoff. Das gesamte erste Zahnrad 3 kann hier als Gussbauteil ausgebildet sein. Die starren Abschnitte 14 und die elastischen Abschnitte 15 werden hier also in einem Spritzgussverfahren integral hergestellt.

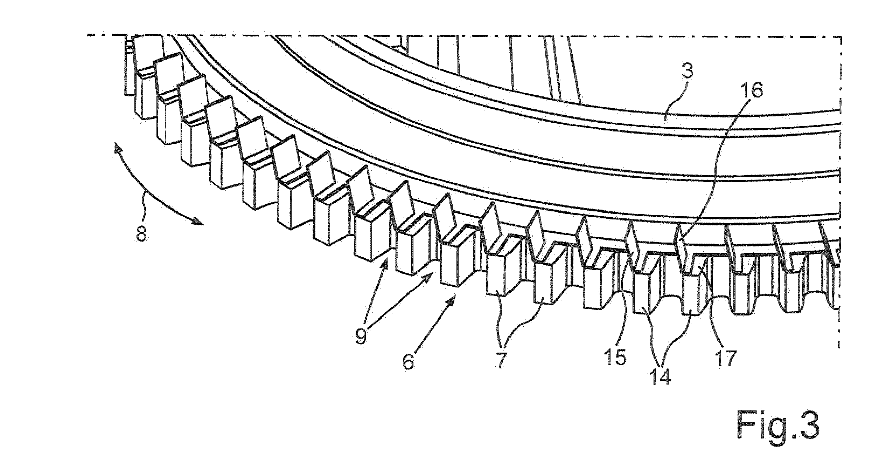

Eine alternative Ausführungsform ist in Fig. 3 gezeigt. Hier sind die elastischen Abschnitte 15 durch separate Bauteile 16 gebildet, insbesondere Stanzbiegeteile. Diese sind an einer axialen Stirnseite 17 des jeweils zugeordneten starren Abschnitts 14 angebracht bzw. befestigt. Die separaten Bauteile 16 wirken ebenfalls als Federelemente, durch welche eine Federkraft in Umfangsrichtung 8 auf die Zähne 13 des kleinen Zahnrads 4 aufgebracht und somit eine gegenseitige Verspannung zwischen den Zahnstrukturen 6, 10 erzeugt wird. Mit anderen Worten werden die Zähne 13 des zweiten Zahnrads 4 durch die Bauteile 16 in Umfangsrichtung gegen den jeweils benachbarten Zahn 7 gedrückt, wodurch eine spielfreie Anordnung in Umfangsrichtung 8 realisiert wird.

Allen Ausführungsformen ist gemeinsam, dass die elastischen Abschnitte 15 frei von dem jeweiligen starren Abschnitt 14 in axialer Richtung abstehen. Die elastischen Abschnitte 15 sind somit ausschließlich an der axialen Seite an den jeweiligen starren Abschnitt 14 angebunden und stehen somit in Form einer Nase in axialer Richtung ab. Außerdem sind die elastischen Abschnitte 15 biegeelastisch verformbar ausgebildet, sodass sie bei Anwesenheit eines Zahns 13 des zweiten Zahnrads 4 in der zugeordneten Zahnlücke 9 verspannt werden und nach Austritt dieses Zahns 13 aus der Zahnlücke 9 wieder in die Ruhestellung gelangen. Auf diese Art und Weise kann das gegenseitige Spiel ausgeglichen und gleichzeitig auch eine präzise und winkeltreue Drehwegübertragung ermöglicht werden.

## Patentansprüche

1. Sensorvorrichtung (1) zum Erfassen eines Positionswinkels eines drehbaren Bauteils eines Kraftfahrzeugs, insbesondere zum Erfassen eines Lenkwinkels einer Lenkwelle des Kraftfahrzeugs, mit einer Zahnradanordnung (2) aus zumindest einem ersten Zahnrad (3) und einem zweiten Zahnrad (4), wobei das erste Zahnrad (3) mit dem Bauteil drehfest koppelbar ist und eine umlaufende Zahnstruktur (6) aufweist, welche zur Übertragung einer Drehbewegung in eine umlaufende Zahnstruktur (10) des zweiten Zahnrades (4) eingreift,
**dadurch gekennzeichnet, dass**
Zähne (7, 13) zumindest einer der Zahnstrukturen (6, 10) jeweils einen im Wesentlichen starren Abschnitt (14) zur Übertragung der Drehbewegung und einen an den starren Abschnitt (14) in axialer Richtung anschließenden elastischen Abschnitt (15) aufweisen, mittels welchem die Zahnstrukturen (6, 10) unter Spielausgleich in Umfangsrichtung (8, 12) miteinander verspannt sind.

2. Sensorvorrichtung (1) nach Anspruch 1,
**dadurch gekennzeichnet, dass**
die elastischen Abschnitte (15) frei von den jeweiligen starren Abschnitten (14) in axialer Richtung abstehen und zum Spielausgleich zwischen den Zahnstrukturen (6, 10) biegeelastisch verformbar ausgebildet sind.

3. Sensorvorrichtung (1) nach Anspruch 1 oder 2,
**dadurch gekennzeichnet, dass**
die elastischen Abschnitte (15) einstückig mit dem jeweils zugeordneten starren Abschnitt (14) ausgebildet sind.

4. Sensorvorrichtung (1) nach Anspruch 1 oder 2,
**dadurch gekennzeichnet, dass**
die elastischen Abschnitte (15) jeweils durch ein von dem jeweils zugeordneten starren Abschnitt (14) separates Bauteil (16), insbesondere ein Stanzbiegeteil, gebildet sind, welches an dem zugeordneten starren Abschnitt (14) angebracht ist.

5. Kraftfahrzeug mit einem drehbaren Bauteil, insbesondere einer Lenkwelle, und mit einer Sensorvorrichtung (1) zum Erfassen eines Positionswinkels des Bauteils nach einem der vorhergehenden Ansprüche.
